Europäisches Patentamt

European Patent Office

Office européen des brevets

(11) Publication number: **0 057 086**
**B1**

## (12) EUROPEAN PATENT SPECIFICATION

(45) Date of publication of patent specification: **09.01.85**

(51) Int. Cl.⁴: **G 11 B 27/02**

(21) Application number: **82300307.4**

(22) Date of filing: **21.01.82**

(54) **Editing systems for audio signals.**

(30) Priority: **22.01.81 JP 8207/81**

(43) Date of publication of application:
**04.08.82 Bulletin 82/31**

(45) Publication of the grant of the patent:
**09.01.85 Bulletin 85/02**

(84) Designated Contracting States:
**AT DE FR GB NL**

(56) References cited:
**DE-A-2 702 780**
**FR-A-2 395 658**
**US-A-4 100 607**
**US-A-4 214 278**

(73) Proprietor: **SONY CORPORATION**
**7-35 Kitashinagawa 6-Chome Shinagawa-ku**
**Tokyo 141 (JP)**

(72) Inventor: **Takeuchi, Hajime**
**4309-921, 4-3-3 Takeyama Midori-ku**
**Yokohama-shi Kanagawa-ken (JP)**
Inventor: **Tachi, Katsuichi**
**439-8, Nakano Ebina-shi**
**Kanagawa-ken (JP)**

(74) Representative: **Thomas, Christopher Hugo**
**et al**
**D Young & Co 10 Staple Inn**
**London WC1V 7RD (GB)**

Courier Press, Leamington Spa, England.

# Description

This invention relates to editing systems for audio signals.

In a conventional editing system wherein video and audio signals are edited and then recorded on a record medium, it is usual for a time code signal, such as the EBU or SMPTE time code signal also to be recorded. Such a time code signal forms an address signal for the video signal by including hour, minute, second and frame signals corresponding to frames of the video signal. Since the EBU and SMPTE time code signals correspond to the frame signals of the video signals, they are quite effective when the video signals, which can change only in frame units, are edited. But, for the audio signals, such time code signals are unsatisfactory, because editing to a finer unit is required. If editing of the audio signal is carried out based on the EBU or SMPTE time code signal, cases will occur where an unwanted audio signal, which was recorded previously, is left between the edited signals on the tape. Such an unwanted audio signal causes a pop noise on playback, so it must be erased by a so-called spot erase. However, it is quite difficult to perform the spot erase automatically and with the required precision.

Patent specification FR—A—2 395 658 discloses a system for editing video signals and comprising a video tape recorder, means for generating pulse signals corresponding to the speed of movement of the tape, speed control means for controlling the tape transport means so as to change the speed and direction of movement of the tape and to find an editing point, an up-down counter for counting said pulse signals in order to produce position data of the tape, memory means for storing output signals from the counter, and means for controlling the editing operation in response to the stored output signals. Patent Specification US—A—4 100 607 discloses a system for editing video tapes using an up-down counter counting frame indicating control pulses recorded on said video tapes.

According to the present invention there is provided a system for editing audio signals, the system comprising:

a helical scan video tape recorder including means for recording audio signals on an audio track extending longitudinally on a magnetic tape;

means for reproducing said audio signals;

means for monitoring said audio signals;

means for reproducing from said tape an address signal corresponding to frames of a video signal recorded on said tape;

means for generating pulse signals corresponding to rotation of means coupled with the movement of said tape; and

speed control means for controlling magnetic tape moving means so as to change the moving speed of said tape and to find an editing point;

characterised by:

a counter for counting said pulse signals up or down in dependence on a tape transporting direction signal, said counter being re-set by a frame signal derived from said address signal;

memory means for storing output signals from said address signal reproducing means and said counter at said editing point; and

edit control means for controlling the operational mode in response to said stored output signals in said memory means and in response to an activated mode selector.

The invention will now be described by way of example with reference to the accompanying drawings, in which:

Figure 1 shows a recording pattern on a magnetic tape; and

Figure 2 is a block diagram of an embodiment of editing system for audio signals and according to the invention.

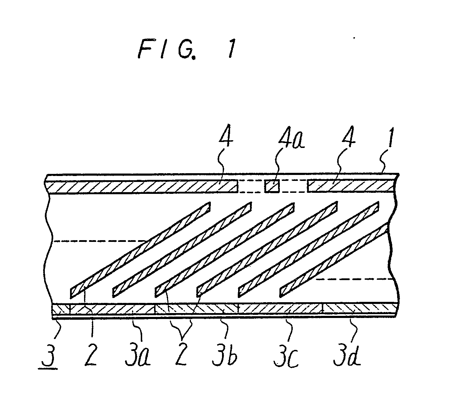

Figure 1 shows a recording pattern on a magnetic tape 1 of a helical scan video tape recorder (VTR) used in the embodiment to be described. Each pair of video signal tracks 2 contains the video signal of one frame. An address track 3 contains SMPTE time code signals 3a, 3b and 3c, each corresponding to a respective frame, and the time code signals 3a, 3b and 3c are located in correspondence with each one frame signal of the respective video signal tracks 2. An audio signal track 4 is also provided and is shown to contain an unwanted audio signal 4a remaining at the join between edited audio signals in the audio signal track 4.

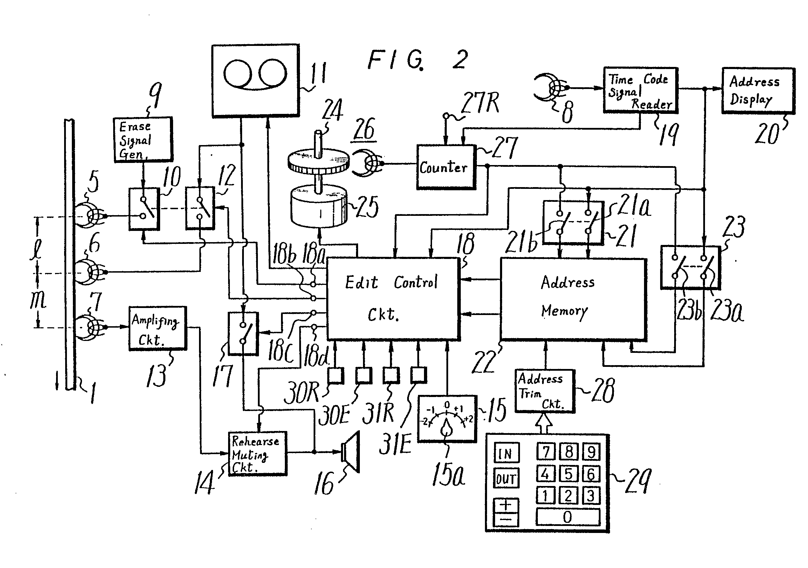

Referring to Figure 2, the editing system comprises an erasing magnetic head 5 for erasing the audio signals recorded on the audio signal track 4 of the tape 1. A recording magnetic head 6 records the audio signals in the audio signal track 4. A reproducing magnetic head 7 is provided for reproducing the audio signals from the audio signal track 4, and an SMPTE time code signal reproducing magnetic head 8 is provided for reproducing the SMPTE time code signal from the address track 3.

The erasing head 5 is arranged to become operative for the erase operation when supplied with an erase signal derived from an erase signal generating circuit 9 and supplied through a connection switch 10 which is controlled by a control signal derived from an edit control circuit 18 that will be described later. A second VTR 11 serves as a source for supplying new audio signals and so on to be edited. The audio signal derived from the VTR 11 is supplied to the recording head 6 by way of a connection switch 12 to be controlled by the control signal produced from the edit control circuit 18. The audio signal reproduced by the reproducing head 7 is supplied through a series circuit formed of an amplifying circuit 13 and a rehearse muting circuit 14 for spot erasing to be controlled by the control signal derived from the edit control circuit 18, to a loudspeaker 16. The audio signal produced from the VTR 11 is supplied to the loudspeaker 16 by way of an editing rehearse connection switch 17 to be controlled by the control signal derived from the edit control circuit 18 as will be described later. The reproduced signal from the time code signal reproducing head 8 is supplied to a time code signal reading circuit or reader 19 and the output signal of the time code signal reader 19 is supplied to an address display 20, so that the present reproducing location of the tape 1 is displayed in dependence on the time code signal. The time code signal at the output side of the time code signal reader 19 is supplied through one connection switch 21a in an in-point deciding switch 21 to an address memory 22 and in addition, this time code signal is supplied through one connection switch 23a in an out-point deciding switch 23 to the address memory 22, and this time code signal is further supplied to the edit control circuit 18 as a comparison signal.

A capstan shaft 24 transports the tape 1 in the usual way and is constructed as in a normal VTR. The rotation of the capstan shaft 24 is controlled by a capstan motor 25.

The capstan shaft 24 is provided with a frequency generator 26. The frequency generator 26 is so formed so as to generate a predetermined number of pulse signals, for example, fourteen equally spaced pulse signals, between each frame signal when the tape 1 is transported at a constant speed, in other words, when the capstan shaft 24 is rotated at the constant speed. In this case, when the time code signal is produced from the tape 1 which is transported by the capstan shaft 24, the number of the pulse signals which the frequency generator 26 generates between the frame signals in the time code signal is always the predetermined number, for example, fourteen irrespective of the rotational speed of the capstan shaft 24.

The output pulse signal from the frequency generator 26 is supplied to a counter 27 as a count signal. The counter 27 is formed of an up-down counter which counts up or down in dependence on a tape transporting direction signal supplied thereto from the time code signal reader 19. Instead of the tape transporting direction signal, it is possible for the counter 27 to be supplied with a signal derived from a tape speed controller which will be described later. Also, the frame signal produced from the time code signal on the tape 1 is supplied to the counter 27 through a reset signal input terminal 27R. The counter 27 is reset by the frame signal which will be supplied to the reset signal input terminal 27R. Accordingly, the counter 27 is arranged to count the output pulse signal between the frame signals in the reproduced time code signal from the frequency generator 26 irrespective of the tape transporting direction and the tape speed.

The count signal produced on the output side of the counter 27 is supplied through another connection switch 21b of the in-point deciding switch 21 to the address memory 22, and the count signal is also supplied to the address memory 22 via another connection switch 23b of the out-point deciding switch 23. In addition, the count signal is supplied as the comparison signal to the edit control circuit 18. In this case, it is arranged that the switches 21a and 21b of the in-point deciding switch 21 are simultaneously made ON and OFF. The time code signal and the count signal at the time at which the switches 21a and 21b are made ON are memorized in the address memory 22 as an editing start time information signal which will be supplied to the edit control circuit 18. Also, the switches 23a and 23b in the out-point deciding switch 23 are so arranged that they are respectively made ON and OFF simultaneously. The time code signal and the count signal at the time at which the switches 23a and 23b are made ON are supplied to and memorized in the address memory 22 as an editing end time information signal. The editing end time information signal thus stored at the address memory 22 is supplied to the edit control circuit 18.

An address trim circuit 28 includes an arithmetic function to supply an address trim signal to the address memory 22 in accordance with operations of a keyboard 29 thereby allowing the editing start-and-end time information signals to be trimmed or corrected. The keyboard 29 is provided with ten keys and keys for "IN", "OUT", "+", and "−". The outputs therefrom are supplied to the address trim circuit 28. When the address of the in-point is intended to be trimmed, the "IN" key on the keyboard 29 is depressed and if necessary, the "+" or "−" key and a numerical key or keys of the ten keys is depressed in response to the desired amount of trimming, so that the address trim circuit 28 operates to change the in-point address which is stored in the address memory 22. Because the trimming using the ten keys is carried out in units responsive to the input pulse of the counter 27, if the trimming is performed together with the confirmation by the rehearse operation as described later, it is possible to decide the accurate address of the edit point.

The editing system also includes an audio rehearse button 30R, an audio edit button 30E, a spot erase rehearse button 31R and a spot erase button 31E, and signals respectively produced therefrom are supplied to the edit control circuit 18. When the audio rehearse button 30R, the audio edit button 30E, the spot erase rehearse button 31R and the spot erase button 31E are respectively operated, the edit control circuit 18 is activated by a computer incorporated therein to control the audio rehearse operation, the audio edit operation, the spot erase rehearse operation and the spot erase operation respectively.

A tape speed controller 15 includes a potentiometer to be adjusted by rotation of a knob 15a. The output therefrom is supplied to the edit control circuit 18, by which the rotational direction and the speed of the capstan motor 25 or a capstan motor (not shown) of the VTR 11 are controlled. When the knob 15a in the tape speed controller 15 is at the centre position thereof, the capstan motor 25 is stopped. When it is turned in the clockwise direction, the capstan motor 25 rotates in the normal direction and the rotational speed thereof is increased in accordance with the angle of rotation. In case of counter-clockwise turning, the capstan motor 25 is rotated in the reverse direction, and the rotational speed thereof is likewise increased in accordance with the angle of rotation.

In Figure 2, a case is illustrated in which the rotational speed can be controlled in a range from plus double speed (as compared with the normal play speed) to minus double speed. Various other function keys may be provided on the keyboard 29 to control the edit control circuit 18, but these function keys are not shown because they are not essential to the present invention.

The edit control circuit 18 will now be described in more detail.

A description will first be given of a case where the unwanted audio signal 4a as seen in Figure 1 is erased, more specifically, a so-called spot-erase is performed.

Since the audio signal 4a is short in length, it is quite difficult to decide the position of the audio signal 4a in the audio signal track 4 if the tape 1 is transported at the normal speed. Therefore, the knob 15a in the tape speed controller 15 must be adjusted in order that the rotational speed of the capstan motor 25 is made slower than the normal speed. While the reproduced signal reproduced by the reproducing head 7 in the low speed mode mentioned above is monitored through the loudspeaker 16, the start point of the audio signal 4a is seached for and then the tape 1 is stopped. When the audio signal 4a or its start point is not found at once by the aforesaid method, the start point can be searched for by transporting the tape 1 in the normal and reverse directions before and after the start point. After the tape 1 has been stopped at the start point of the audio signal 4a, keeping this state of the tape 1, the in-point deciding switch 21 is operated to supply the time code signal at the output side of the time code signal reader 19 and the count signal at the output side of the counter 27 is that time to the address memory 22 to be memorized therein as the erase start time information signal.

Next, by the same operation, the tape 1 is stopped at the end point of the audio signal 4a and the out-point deciding switch 23 is activated to supply the time code signal at the output side of the time code signal reader 19 and the count signal at the output side of the counter 27 at that time to the address memory 22 to be memorized therein as the erase end time information signal.

With respect to the operations of the in-point deciding switch 21 and the out-point deciding switch 23, these switches 21 and 23 may also be operated while the tape 1 is transported and the values of the time code signal reader 19 and the counter 27, which will be produced at the instant the switch buttons are depressed, are stored in the address memory 22. But, in this case, because there is a reaction delay before an operator depresses the switch button subsequent to hearing the sound, a so-called reaction trim is needed. This trim is performed as follows. After the "IN" or "OUT" and "+" or "−" buttons on the keyboard 29 have been operated, numerals responsive to the reaction delay time of the operator are inputted by the ten keys, whereby the address of the memory 22 can be trimmed or corrected by the address trim circuit 28.

In this way, the start and end points of the unwanted audio signal 4a are decided. However, if the erase operation is carried out by the arrangement as set forth above, there is a possibility that parts other than the unwanted audio signal 4a will be erased, and hence it is recommended that the rehearse operation is performed to check the above possibility, as follows.

When the spot erase rehearse button 31R is depressed, the edit control circuit 18 sequentially carries out the following commands. First, the tape 1 is rewound by a predetermined distance from the in-point address previously decided, that is, a so-called pre-roll is carried out. After the pre-roll, the tape 1 is transported at the normal speed and at the same time, the audio signal is reproduced. In this state, the edit control circuit 18 compares the time code signal at the output side of the time code reader 19 and derived from the tape 1, and the count signal at the output side of the counter 27, with the erase start time information signal stored in the address memory 22. When these signals are coincident with each other, the edit control circuit 18 produces a muting control signal at its muting control signal output terminal 18d and supplies it to the rehearse muting circuit 14, which is why the audio signal to be supplied to the loudspeaker 16 is muted. Next, the edit control circuit 18 compares the time code signal derived from the time code signal reader 19 and the count signal from the counter 27 with the erase end time information signal memorized in the address memory 22. When these signals are made coincident with each other, the edit control circuit 18 stops the muting control signal at the muting control signal output terminal 18d, so that the muting operation of the rehearse muting circuit 14 is released to allow the audio signal to be supplied to the loudspeaker 16. In other words, with the spot erase rehearse operation, it is possible to mute the sound at the part which is intended to be erased.

If it becomes clear from the rehearse operation that the in-point and/or out-point is unsuitable, the keyboard 29 is operated in the same manner as the aforementioned reaction trim to change the addresses thereof, thus permitting the rehearse operation to be performed again. When the portion which is intended to be erased is determined as satisfactory by the spot erase rehearse operation, it is sufficient that the spot erase button 31E is operated and in this case, the edit control circuit 18 operates as described above. But, since there are some differences in the distances between the magnetic heads, such as $m$ between the reproducing head 7 and the recording head 6 and $l$ between the recording head 6 and the erasing head 5 as seen in Figure 2, upon erasing, the erase operation is performed with a timing such that these differences are corrected. The difference between the erase start time information signal derived from the address recording apparatus or the address memory 22, the time code signal from the time code signal reader 19 and the counter signal derived from the counter 27 becomes equal to the aforesaid distance $l + m$, the erase control signal is developed at an erase control signal output terminal 18a, so that the switch 10 is closed by the erase control signal to supply the erase signal derived from the erase signal generating citcuit 9 to the erasing head 5 so as to put the erasing head 5 in the erasing mode. This erasing mode of the erasing head 5 lasts until the difference between the erase end time information signal stored in the address memory 22, the time code signal read out from the time code signal reader 19 and the count signal derived from the counter 27 becomes equal to the aforesaid $l + m$, so that the spot erase operation is maintained. In this case, since the count signal derived from the counter 27 is used in addition to the time code signal, which is the frame signal, to determine the erase start time and the erase end time, it is possible to determine the erase start time and the erase end time of the erase operation with a finer unit, and the spot erase of the unwanted audio signal can be carried out by the automatic operation.

A description will next be given of a case where signals are partially inserted when editing is carried out, namely, a so-called insert edit is performed.

In this case, the edit start time and the edit end time are decided in the same manner as the erase start time and the erase end time mentioned above and the edit start-and-end time information signals are memorized in the address memory 22.

Also, with respect to the VTR 11, the edit start-and-end time information signals are stored in the address memory 22 by like operations, where this time, it is sufficient that only the in-point is stored.

When the audio rehearse operation is carried out for the audio signal prior to the editing, the audio rehearse button 30R is operated.

In this case, the edit control circuit 18 generates a like command for the VTR 11 at the same time as the pre-roll of the magnetic tape 1, so that the magnetic tape 1 and the VTR 11 are started to be transported in the play modes after the pre-roll has been carried out. Next, the edit control circuit 18 compares the time code signal at the output side of the time code signal reader 19 from the tape 1 and the count signal at the output side of the counter 27 with the edit start time information signal stored in the address memory 22. When these signals are coincident with one another, the muting control signal is produced at the muting control signal output terminal 18d of the edit control circuit 18, and is supported to the rehearse muting circuit 14 to perform the muting operation thereof. At the same time, the edit control circuit 18 produces the audio rehearse control signal at an audio rehearse control signal output terminal 18c whereby the editing rehearse switch 17 is closed by this audio rehearse control signal to supply the audio signal derived from the VTR 11 to the loudspeaker 16. The aforesaid state lasts from the edit start time to the edit end time. When the time code signal derived from the time code reader 19, the count signal from the counter 27 and the edit end time information signal memorized in the address memory 22 becomes coincident with each other, the respective control signals cease at the control signal output terminals 18c and 18d, so that the editing release switch 17 is made OFF and the muting operation of the rehearse muting circuit 14 is released. In other words, in the audio rehearse operation, thus described, the reproduced signal from the reproducing head 7 is supplied to the loudspeaker 16 in the normal mode while the audio signal derived from the VTR 11 which will be inserted thereinto is supplied to the loudspeaker 16 between the edit start-and-end times by which the state of the tape 1 after the editing was completed can be known from the sound the loudspeaker 16 reproduces.

If there still remains an unwanted sound, it is sufficient that the trim operation is performed in the same manner as described above. If the edited state of the tape 1 is approved as satisfactory through this audio rehearse operation, the audio edit button 30E is depressed to activate the edit control circuit 18 in the same manner as the aforesaid audio rehearse mode. But, as described above, since the respective heads 5, 6 and 7 have the distance difference therebetween, the switch 10 is controlled to be turned ON ahead of the memorized address by the amount $l + m$, and the switch 12 is controlled to be made ON ahead of the memorized address by the amount of $m$, and the switches 10 and 12 are controlled to be made OFF ahead of the memorized address by like amounts, respectively, thereby to perform the insert edit.

In this case, since the count signal derived from the counter 27 is also used in addition to the time code signal, which is the frame signal, in order to decide the edit start-and-end times like the spot erase, it is possible to decide the edit start-and-end times with a finer unit and hence the editing of the tape can be performed with a finer unit.

While the above description relates to an insert edit, the editing system can also be used for a so-called assembly edit where one signal is simply connected to another signal.

With the embodiment described, since the address signal between the frame signals is obtained from the frequency generator 26 provided in connection with the capstan shaft 24, it is possible to derive the address signal with a predetermined interval relative to the magnetic tape 1, independent of the transportation speed of the tape 1. Consequently, even if the tape 1 is transported at low speed, the address of the address memory 22 is decided and there is little influence caused by the reaction delay of the operator.

While in the embodiment, the frequency generator 26 is provided in association with the capstan shaft 24 to form the address signal between the frame signal, instead of the frequency generator 26, a so-called counter roller having a rotary shaft rotated by the feeding of the tape and driving a pulse generator may be provided.

While the above description of the embodiment describes a case where the SMPTE time code signal is utilized, other time code signals such as the EBU time code signal or the video intermediate time code signal in which the time code signal is recorded during one horizontal blanking period of the video signal as disclosed in US patent 4 159 480 can be used.

## Claims

1. A system for editing audio signals, the system comprising:

a helical scan video tape recorder including means (6) for recording audio signals on an audio track (4) extending longitudinally on a magnetic tape (1);

means (7) for reproducing said audio signals;

means (16) for monitoring said audio signals;

means (8, 19) for reproducing from said tape (1) an address signal corresponding to frames of a video signal recorded on said tape (1);

means (26) for generating pulse signals corresponding to rotation of means coupled with the movement of said tape (1); and

speed control means (15) for controlling magnetic tape moving means (24) so as to change the moving speed of said tape (1) and to find an editing point; characterised by:

a counter (27) for counting said pulse signals up or down in dependence on a tape transporting direction signal, said counter (27) being reset by a frame signal derived from said address signal;

memory means (22) for storing output signals from said address signal reproducing means (8, 19) and said counter (27) at said editing point; and

edit control means (18) for controlling the operational mode in response to said stored output signals in said memory means (22) and in response to an activated mode selector (30R, 30E, 31R, 31E).

2. A system according to claim 1 comprising a circuit for comparing output signals produced from said counter (27) and output signals produced by said address signal reproducing means (8, 19), with said stored output signals derived from said memory means (22).

3. A system according to claim 1 wherein said memory means (22) stores second output signals produced from said address signal reproducing means (8, 19) and said counter (27) at a second edit point.

4. A system according to claim 1 wherein said video tape recorder includes erasing means (5) for erasing recorded audio signals, said erasing means (5) being activated in an erase mode (31E).

5. A system according to claim 1 wherein said address signal reproducing means (8, 19) includes a magnetic head (8) for reproducing the address signal recorded on a control track (3) extending longitudinally on said tape (1).

6. A system according to claim 1 wherein the video tape recorder includes a reproducing rotary magnetic head for reproducing the video signal, and said address signal reproducing means includes a circuit for removing the address signal from the reproduced signal reproduced by said rotary magnetic head.

7. A system according to claim 1 wherein said edit control means (18) includes a manual switch (21) for supplying the output signals from said address signal reproducing means (8, 19) and said counter (27) to said memory means (22).

8. A system according to claim 1 wherein said edit control means (22) includes means for making said monitoring means (16) inoperative in response to said stored output signals.

9. A system according to claim 1 wherein said edit control means (22) includes a circuit (28) for trimming the contents of said memory means (22) by using a keyboard (29).

10. A system according to claim 1 wherein said pulse signal generating means (26) is a pulse generator mounted in association with a tape capstan (24).

11. A system according to claim 1 wherein said pulse signal generating means (26) is a rotation means to be rotated by the movement of said tape (1) and a pulse generator driven thereby.

## Patentansprüche

1. Schnittsystem für Audiosignale, mit einem Schrägspur- Video-Magnetbandrecorder, der ein Mittel (6) zum Aufzeichnen von Audiosignalen in einer Audiospur (4), welche sich in Längsrichtung auf einem Magnetband (1) erstreckt, ein Mittel (7) zum Wiedergeben der Audiosignale, ein Mittel (16) zum Abhören der Audiosignale, Mittel (8, 19) zum Wiedergeben eines Adreßsignals, das mit Bildern des auf dem Magnetband (1) aufgezeichneten Videosignals korrespondiert, von dem Magnetband (1), ein Mittel (26) zum Erzeugen von Impulssignalen, die mit der Drehung eines Mittels, welches mit der Bewegung des Magnetbandes (1) gekoppelt ist, korrespondieren, und ein Geschwindigkeitssteuermittel (15) zum Steuern eines Magnetbandbewegungsmittels (24) derart, daß die Bewegungsgeschwindigkeit des Magnetbandes (1) gesteuert und ein Bandschnittpunkt gefunden wird, enthält, gekennzeichnet durch

einen Zähler (27) zum Abzählen der Impulssignale aufwärts oder abwärts in Abhängigkeit von einem Magnetbandtransportrichtungssignal, welcher Zähler (27) durch ein Bildsignal rückgesetzt wird, das aus dem Adreßsignal gewonnen wird, ein Speichermittel (22) zum Speichern von Ausgangssignalen der Mittel (8, 19) zum Wiedergeben eines Adreßsignals und des Zählers (27) an dem Bandschnittpunkt und

ein Schnittsteuermittel (18) zum Steuern der Betriebart in Abhängigkeit von gespeicherten Ausgangssignalen in dem Speichermittel (22) und in Abhängigkeit von einem wirksam gemachten Betriebsartwähler (30R, 30E, 31R, 31E).

2. System nach Anspruch 1, dadurch gekennzeichnet, daß eine Schaltung zum Vergleichen der Ausgangsignale, die von dem Zähler (27) erzeugt werden, und der Ausgangssignale, die durch die Mittel (8, 19) zum Wiedergeben eines Adreßsignals erzeugt werden, mit den gespeicherten Ausgangssignalen, die aus dem Speichermittel (22) gewonnen werden, vorgesehen ist.

3. System nach Anspruch 1, dadurch gekennzeichnet, daß das Speichermittel (22) zweite Ausgangssignale, die von den Mitteln (8, 19) zum Wiedergeben eines Adreßsignals und dem Zähler (27) bei einem zweiten Bandschnittpunkt erzeugt werden, speichert.

4. System nach Anspruch 1, dadurch gekennzeichnet, daß der Video-Magnetbandrecorder ein Löschmittel (5) zum Löschen aufgezeichneter Audiosignale enthält und daß das Löschmittel (5) in einer Löschbetriebsweise (31E) wirksam gemacht wird.

5. System nach Anspruch 1, dadurch gekennzeichnet, daß die Mittel (8, 19) zum Wiedergeben eines Adreßsignals einen Magnetkopf (8) zum Wiedergeben des Adreßsignals enthalten, das in einer Steuerspur (3) aufgezeichnet ist, die sich längs des Magnetbandes (1) erstreckt.

6. System nach Anspruch 1, dadurch gekennzeichnet, daß der Video-Magnetbandrecorder einen Wiedergabe-Rotationsmagnetkopf zum Wiedergeben des Videosignals enthält und daß die Mittel zum Wiedergeben eines Adreßsignals eine Schaltung zum Entfernen des Adreßsignals aus dem wiedergegebenen Signal, das von dem Rotationsmagnetkopf erzeugt wird, enthalten.

7. System nach Anspruch 1, dadurch gekennzeichnet, daß das Schnittsteuermittel (18) einen Handschalter (21) zum Eingeben der Ausgangssignale der Mittel (8, 19) zum Wiedergeben eines Adreßsignals und des Zählers (27) in das Speichermittel (22) enthält.

8. System nach Anspruch 1, dadurch gekennzeichnet, daß das Schnittsteuermittel (18) ein Mittel zum Unwirksammachen des Mittels (16) zum Abhören in Abhängigkeit von den gespeicherten Ausgangssignalen enthält.

9. System nach Anspruch 1, dadurch gekennzeichnet, daß das Schnittsteuermittel (18) eine Schaltung (28) zum Abstimmen der Inhalte des Speichermittels (22) durch Benutzung eines Tastenfeldes (29) enthält.

10. System nach Anspruch 1, dadurch gekennzeichnet, daß das Mittel (26) zum Erzeugen von Impulssignalen ein Impulsgenerator ist, der in Zuordnung zu einer Bandantriebsachse (24) montiert ist.

11. System nach Anspruch 1, dadurch gekennzeichnet, daß das Mittel (26) zum Erzeugen von Impulssignalen ein Drehteil, das durch die Bewegung des Magnetbandes (1) zu drehen ist, und ein Impulsgenerator, der dadurch getrieben wird, ist.

**Revendications**

1. Système de montage de signaux de son, système comprenant un enregistreur sur bande vidéo à analyse hélicoïdale comprenant un dispositif (6) pour enregistrer des signaux de son sur une piste de son (4) dans la direction longitudinale sur une bande magnétique (1), un dispositif (7) pour reproduire lesdits signaux de son; un dispositif (16) pour contrôler lesdits signaux de son, un dispositif (8, 19) pour reproduire à partir de ladite bande (1) un signal d'adresses correspondant aux trames d'un signal vidéo enregistré sur ladite bande (1), un dispositif (26) pour produire des signaux d'impulsions correspondant à la rotation d'un dispositif accouplé avec le mouvement de ladite bande (1); et un dispositif de commande de vitesse (15) pour commander le dispositif d'entrainement de la bande magnétique (24) afin de changer la vitesse de mouvement de ladite bande (1) et de trouver un point de montage;· caractérisé par: un compteur (27) pour compter ou décompter lesdits signaux d'impulsions, en fonction d'un signal de direction de transport de la bande, ledit compteur (27) étant ramené au repos par le signal de trame produit à partir dudit signal d'adresses; une mémoire (22) pour mémoriser des signaux de sortie dudit dispositif de reproduction du signal d'adresses (8, 19) et dudit compteur (27) audit point de montage; et un dispositif de commande de montage (18) pour commander le mode de fonctionnement en réponse auxdits signaux de sortie mémorisé dans ladite mémoire (22) et en réponse à un sélecteur de mode manoeuvré (30R, 30E, 31R, 31E).

2. Système selon la revendication 1, comprenant un circuit pour comparer des signaux de sortie produits par ledit compteur (27) et des signaux de sortie produits par ledit dispositif de reproduction de signal d'adresses (8, 19) avec lesdits signaux de sortie mémorisés dérivés de ladite mémoire (22).

3. Système selon la revendication 1, dans lequel ladite mémoire (33) mémorise des seconds signaux de sortie produits par ledit dispositif de reproduction de signal d'adresses (8, 19) et ledit compteur (27) en un second point de montage.

4. Système selon la revendication 1, dans lequel ledit enregistreur sur bande vidéo comporte un dispositif d'effacement (5) pour effacer des signaux de son enregistrés, ledit dispositif d'effacement (5) étant actionné dans un mode d'effacement (31E).

5. Système selon la revendication 1, dans lequel ledit dispositif de reproduction de signal d'adresses (8, 19) comporte une tête magnétique (8) pour reproduire le signal d'adresses enregistré sur une piste de commande (3) dans la direction longitudinale de ladite bande (1).

6. Système selon la revendication 1, dans lequel ledit enregistreur sur bande vidéo comporte une tête magnétique tournante de reproduction pour reproduire le signal vidéo et ledit dispositif de reproduction de signal d'adresses comprenant un circuit pour éliminer le signal d'adresses du signal reproduit par ladite tête magnétique tournante.

7. Système selon la revendication 1 dans lequel ledit dispositif de commande de montage (18) comporte un commutateur manuel (21) pour fournir les signaux de sortie dudit dispositif de reproduction du signal d'adresses (8, 19) et dudit compteur (27) à ladite mémoire (22).

8. Système selon la revendication 1, dans lequel ledit dispositif de commande de montage (22) comporte un dispositif par lequel ledit dispositif de contrôle (16) devient inopérant en réponse auxdits signaux de sortie mémorisés.

9. Système selon la revendication 1, dans lequel ledit dispositif de commande de montage (22) comporte un circuit (28) pour ajuster le contenu de ladite mémoire (22) en utilisant un clavier (29).

10. Système selon la revendication 1, dans lequel ledit dispositif générateur de signal d'impulsions (26) est un générateur d'impulsions monté en association avec un cabestan de bande (24).

11. Système selon la revendication 1, dans lequel ledit dispositif générateur de signal pulsé (26) est un dispositif tournant mis en rotation par le mouvement de ladite bande (1) et un générateur d'impulsions qu'il entraine.

# F I G. 1

FIG. 2